# EUROPEAN PATENT APPLICATION

(11) **EP 1 494 131 A1**
(43) Date of publication of application: **05.01.2005**
(21) Application number: 03014423.2
(22) Date of filing: 30.06.2003
(51) Int. Cl.: G06F 17/30

(54) **Method and system for displaying configurable text fields in web based business applications**

(71) Applicant: SAP Aktiengesellschaft, 69190 Walldorf (DE)
(72) Inventor: Kircher, Stefan, 76669 Bad Schönborn (DE); Kornmann, Tim, 69207 Sandhausen (DE)

(57) **Abstract**

This invention relates to the necessary processes and application enhancements to provide customer extension functionality in terms of displaying additional configurable text fields in a web application. When a message (310), describing the additional text fields on header and/or item level by means of name-value pairs, is received, the additional text fields are mapped into the database (250) of the business application. To get displayed the additional fields are mapped from the database (250) into an instance of a container class in the model component. By passing the instance of the container class from the model component to the view component, an HTTP response is created using the information provided by the instance of the container class. An HTML Browser (200) receiving the HTTP response displays the additional fields.

## Description

### Field of the Invention

This invention relates to the necessary processes and application enhancements to provide customer extension functionality in terms of displaying configurable text fields in a web application.

### Background of the Invention

Standard software does not always cover every customer's purposes and needs. Some business processes require additional configurable text fields to be processed, for example a detailed technical description of an order item, which may not be supported in standard software applications.

Variable text information in a Web application's user interface necessitates modifying the web applications underlying source code and the related HTML output.

It is one object of the invention to describe a method to display additional configurable text fields in a web application, without the need to change the Web Application's underlying source code

### Brief Summary of the Invention

To avoid any modification in the web applications user interface a generic mechanism to display variable text information is implemented. This allows providing additional text fields on Web user interfaces without any code modification. All information needed is stored inside database tables and may be exchanged with other systems by means of adequate messaging. Messaging may be in form of XML messages.

A method of displaying additional text fields in database based business applications is described. The web application includes a Web user interface component, which consists of a model component, a view component, and a controller component. The method includes a step in which a message describing the text fields on header and/or item level by means of name-value pairs is received. Then the additional fields are mapped into the database of the business application. During this step the name-value pairs in the HEADER and/or ITEM information supplied by the message are transformed into a table structure. In the following step the additional fields are mapped from the database into an instance of a container class in the model component by transforming the table structure into name-value pairs. Finally, to display the additional fields the instance of the container class is passed from the model component to the view component. The view component creates an HTTP response using the information provided by the instance of the container class and causes an HTML Browser receiving the HTTP response to display the additional fields.

In a first step keys for the configurable text fields are added to a customizing data table (270).

The instance of the container class may contain several sub-instances of the same type to realize a 1:N-relationship of header to items.

Details of one or more implementations are set forth in the accompanying drawings and the description below. Other features and advantages may be apparent from the description, the drawings, and the claims.

### Brief Description of the Drawings

Figure 1 shows a diagram of a generic computer system used to implement current invention.
Figure 2 shows the setup of Figure 1 from an architectural viewpoint.
Figure 3 shows an overview of the application initialisation process.
Figure 4 shows an illustration of the basic architecture of a Web Application according to the invention.
Figure 5 shows an abstract overview of the Web UI's architecture.
Figure 6 shows a diagram of the Web UI mechanism according to the invention.
Figure 7 shows a class diagram of a data structure used by the invention.

### Detailed Description of the Invention

Referring now to the drawings, in which like numerals represent like elements throughout the several figures, aspects of the present invention and the exemplary operating environment will be described.

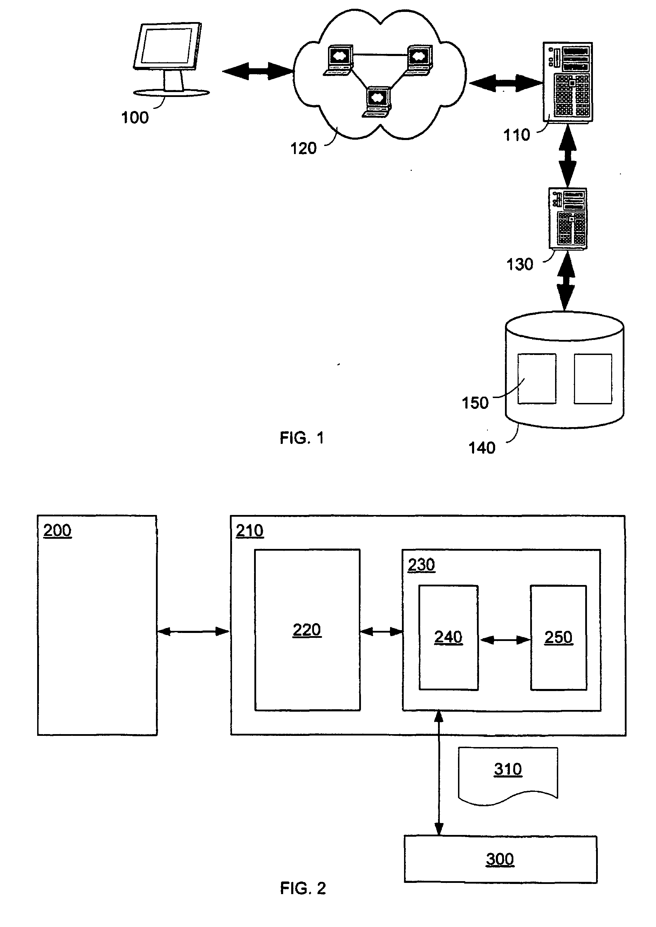

Figure 1 shows diagram of a typical network setup in connection with the current invention. A user computer 100 is connected to a Web Application Server 110 by a computer network 120. A business server 130, which has access to a database 150 administrated by a database server 140, is connected to Web Application server 110. The connections between the Web Application server 110, the business server 130, the database server 140 and the database 150 may differ from the setup shown in the diagram. The connection may also be achieved by means of the network 120. Since most applications store data in relational databases, database 150 may be a relational database.

Figure 2 shows the setup of Figure 1 from an architectural viewpoint. A web browser 200 running on the user computer 100 is accessing a web application 210 on the web application server 110 through networking means 120. Communication is achieved by exchanging HTTP requests and HTTP responses. The web application 210 consists of a web user interface component (web UI or UI component) 220 and a backend system component 230 provided by business server 130. The web UI component 220 administers content displayed by the web browser 200 on the user computer 100. The backend system component 230 consists of a business logic component 240 and a database component 250 provided by database server 140.

A further business system 300 running a different application on another server may be communicating with the backend system 230. The communication between both systems is loosely coupled by message-based technologies such as an XML service. Thus, the systems communicate by passing business documents 310 rather than by passing objects. The Backend system component may be one of SAP's CRM, HR etc.

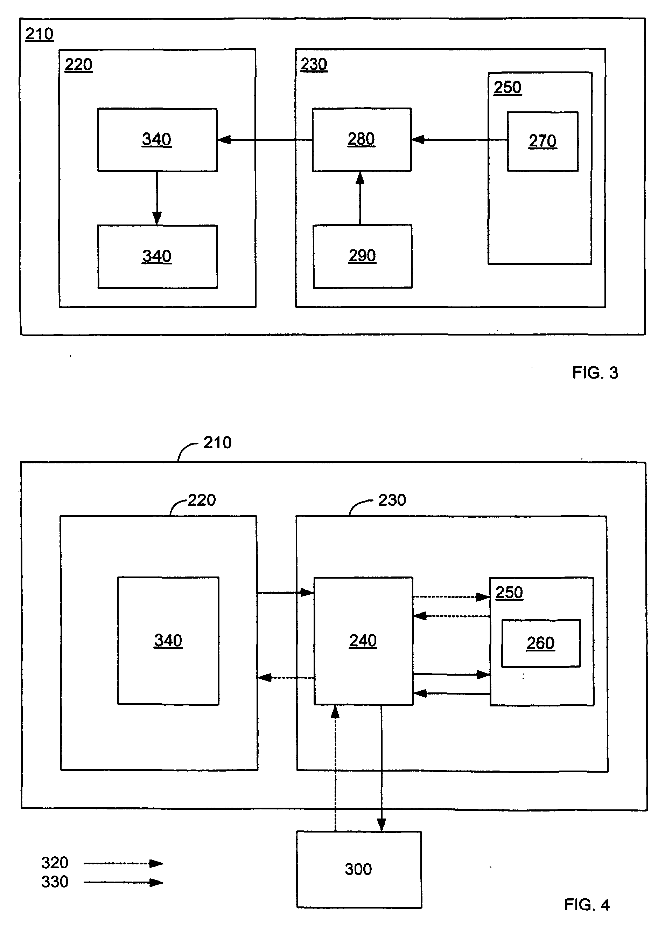

Figure 3 shows the application initialization process. The first step to enable configurable text fields is to add the names of the text fields to the customizing data table 270 in the backend system database 250. Also some customizing the configurations inside the backend system is required. During customization the names (sometimes called ids or keys) for the text fields are added to the customizing data table 270 in the backend database. Today, in most business systems customization is done using text files, XML files or database tables.

The application initialization process the Web UI 220 reads general application configuration information from backend system database 250, which is stored in the customizing data table 270. The customization is detected by a function module 280, which checks if specific text-ids or sequences were added. The web UI reads text fields customizing information via the function module 280 and stores it inside the current session 340. A text area for each text-id is created inside the backend system database, where variable text information can be stored without limitation of text length. Additional configuration of the text fields can be done via a modifications interface 290. The modification interface 290 is called inside the function module 280. Upon activation a class will automatically be created in which the additional configuration is implemented. The additional configuration may include information about restrictions of the text field's accessibility to special groups of system users.

Figure 4 shows an illustration of the basic architecture of a Web Application 210 according to the invention. In order to illustrate the method of displaying configurable text fields the underlying processes have to be explained. From an architectural point of view three additional processes can be defined: an inbound process 320, an outbound process 330, and a UI process 340. The inbound process 320 receives a message 310, which may be an XML message, created by another application and containing descriptions of text fields to be displayed and changed at the user interface 220. The inbound process 320 maps the text fields to internal backend data structures and stores them in the database 250. A text table 260 that has been created as lined out above by the application initialization process will hold the text values using the text-ids as primary key. The UI process 340 receives the content including the text fields from the backend system 230 and generates as well as displays the output. After being changed on the UI component 220 - to be precise: after being changed by the user using the web browser 200 running on the user computer 100 - the content is transferred back to the backend system component 230 where the outbound process saves it in the database 250 and creates an XML message 310, which is sent back to the requesting application 300. The message is created using text-id and text value as key-value pairs inside the message.

The Web-UI may consist of one of various different Web Technologies. The two most common techniques are Sun Microsystems's Java 2 Enterprise Edition (J2EE) and Microsoft's .NET. All of these technologies wrap HTTP requests and responses into own objects, which provide an access to requests and responses content. The processing of this content is done inside dedicated classes, which typically control the UI state and create the output, e.g. Servlets/Java Server Pages(JSP) in J2EE, Active Server Pages(ASP) in .NET. These classes are also capable to dynamically create, change or display generic content.

Techniques like JSP or ASP provide a custom tag library functionality, which basically abstracts the native language (Java and C# respectively) from the Web language HTML, in order to simplify the Web Application's UI. This functionality may also be used for creating generic content. Since both JSP and ASP are the most commonly used UI techniques all over the Internet the tag library functionality will be used to display the customer-defined fields on the Web UI.

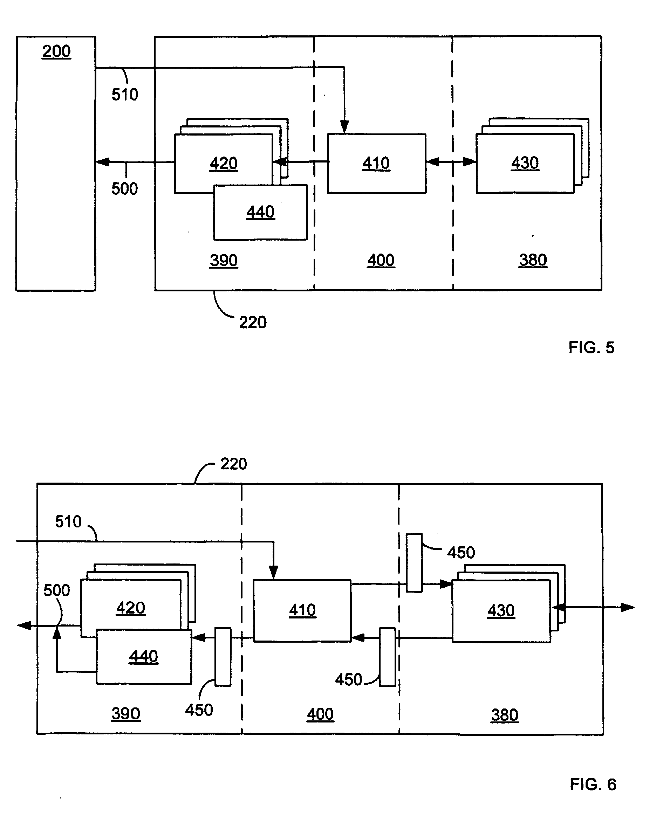

Figure 5 shows an abstract overview of the Web UI's architecture. Usually the Web UI component 220 is subdivided in several different layers corresponding to the commonly known Model View Controller paradigm. The Model View Controller paradigm specifies the decoupling of the UI independent business data and processes handled by the model 380 from UI dependent display functionality handled by the view 390 and the application flow handled by the controller 400. In Java terms a Servlet 410 may act as the controller 400, several Java Server Pages (JSP) 420 may be part of the view 390 and various Java Beans 430 may be the models of the Web Application 210. Another part of the view 390 may be a custom tag library 440.

The View components create an HTTP response 500, which is send to the HTML browser 200. Upon user action HTML browser 200 creates an HTTP request 510 that is directed to Controller 400. If necessary, Controller components 400 update the data in model 430 and request a new HTTP response to be created by the View components 390.

Based upon the Web Application's architecture mentioned above the UI process 340 can be described with reference to Figure 6. In order to guide the fields through all possible UI architecture layers a mapping of the text fields into an instance of an UI technology dependent container class 450 will be necessary inside the model layer 380. This instance may contain several sub instances of the same type in order to realize a possible 1:N relationship of header to items.

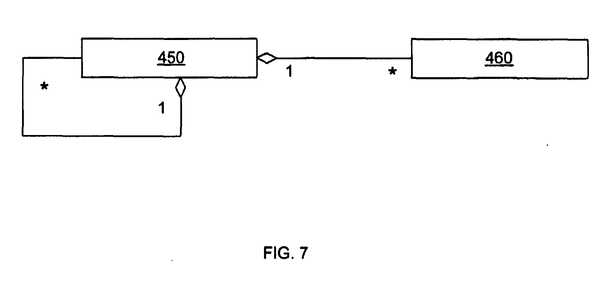

Figure 7 shows a class diagram demonstrating the UI container's data structure from an abstract point of view.

Afterwards the container 450 will be passed through all Web UI layers to the view components 390. There a generic mechanism creates a string, which represents an HTML table that comprises the text fields. The string will be stored inside the HTTP Response for the purpose of displaying it inside the HTML browser 200, like every other HTML content. This process may be done inside the view component 420, directly. It may also be done inside a Custom tag library 440. Depending on the text field's values stored in the current session the field's designation and its type (changeable/ display only) will be set. In order to identify changeable text fields (or in HTML terms: input fields) in the further processes the field's name will be the same as in the backend plus an additional prefix.

After being displayed and changed on the Web browser 200 the changeable fields will be read out of the next HTTP Request. The allocation, which fields are customer defined additional text fields and which are not, is done via the prefix. Afterwards the fields are stored into the UI container 450 and passed back to the model where they will be sent back to the outbound process 330.

Since the outbound process 330 is the inversion of the inbound process 320, it won't be described in detail. As shown in Figure 2 the outbound process 330 stores the changed (or all) additional fields in the database 250 of the backend system component 230. Then it generates a message 310, which gets send to the calling application 300. The format of the message generated by the outbound process may be identical to the message received by the inbound process. Both may be XLM messages.

A number of embodiments of the invention have been disclosed. Nevertheless, it will be understood that various modifications may be made without departing from the spirit and scope of the invention. For example depending on the Web Technology used, Java Server Pages or Active Server Pages are used as View component, Servlets or Active Server Pages are used as controller component and Java Beans or business beans are used as model components. Accordingly, other embodiments are within the scope of the following claims.

## Claims

1. Method of displaying configurable text fields in database based business applications having a Web user interface component (220), the Web user interface component (220) consisting of a model component (380), a view component (390), and a controller component (400), the method including the steps of:
receiving a message (310), describing the configurable text fields on header and/or item level by means of name-value pairs,
mapping the configurable text fields into the database (250) of the business application by transforming the name-value pairs in the header and/or item information supplied by the message (310) into a table structure,
mapping the configurable text fields from the database (250) into an instance of a container class (450) in the model component (380) by transforming the table structure into name-value pairs,
passing the instance of the container class (450) from the model component (380) to the view component (390), and creating an HTTP response (500) using the information provided by the instance of the container class causing an HTML Browser (200) receiving the HTTP response (500) to display the configurable text fields.

2. The method of claim 1 wherein in a first step keys for the configurable text fields are added to a customizing data table (270).

3. The method of claim 1 wherein the message is a XML message.

4. The method of claim 1 wherein the instance of the container class contains several sub-instances of the same type to realize a 1:N-relationship of header to items.

5. The method of claim 1 comprising further steps enabling the HTML Browser (200) to change changeable fields and send an HTTP request (510) containing the changed fields to the controller component (400).

6. The method of claim 5 wherein the changed fields send to the controller component (400) are mapped into another instance of the container class (450) and passed back to the model component (380).

7. The method of claim 6 wherein the changed fields passed back to the model component (380) are transferred to the backend system component (230).

8. The method of claim 7 wherein the changed fields transferred to the backend system component (230) are stored in database component (250) and processed into a further message (310).

9. Computer program product comprising program code means stored on a computer readable medium for performing the method of any one of the claims 1 to 8 when the program is run on a computer.

10. An article comprising a computer readable medium that stores executable instructions causing a computer system to:
provide a Web user interface component (220) consisting of a model component (380), a view component(390), and a controller component(400) to a database based business application,
enable the business application to receive a message (310), describing text fields of the business applications on header and/or item level by means of name-value pairs,
map the text fields into a database (250) of the business application by transforming the name-value pairs in the header and/or item information supplied by the message (310) into a table structure,
map the text fields from the database (250) into an instance of a container class (450) in the model component (380) by transforming the table structure into name-value pairs,
pass the instance of the container class (450) from the model component (380) to the view component (390), and to create an HTTP response (500) using the information provided by the instance of the container class causing an HTML Browser (200) receiving the HTTP response (500) to display the text fields.

11. The article of claim 10 comprising further instructions causing a computer system to add keys for the configurable text fields to a customizing data table (270) in a first step.

12. The article of claim 11 comprising further instructions causing a computer system to enable the business application to receive an XLM message.

13. The article of claim 11 comprising further instructions causing a computer system to create the instance of the container class to contain several sub-instances of the same type to realize a 1:N-relationship of header to items.

14. The article of claim 11 comprising further instructions causing a computer system to enable the HTML Browser (200) to change changeable fields and send an HTTP request (510) containing the changed fields to the controller component (400).

15. The article of claim 14 comprising further instructions causing a computer system to map the changed fields send to the controller component (400) into another instance of the container class (450) and to pass the another instance of the container class (450) back to the model component (380).

16. The article of claim 15 comprising further instructions causing a computer system to transfer the changed fields from the model component (380) to the backend system component (230).

17. The article of claim 16 comprising further instructions causing a computer system to store the changed fields transferred to the backend system component (230) in database component (250).

18. The article of claim 17 comprising further instructions causing a computer system to process the changed fields into a outbound message (310).
